# EUROPÄISCHE PATENTSCHRIFT

(11) **EP 0 855 235 B1**
(45) Veröffentlichungstag und Bekanntmachung des Hinweises auf die Patenterteilung: **13.06.2001**
(21) Anmeldenummer: 97121504.1
(22) Anmeldetag: 06.12.1997
(51) Int. Cl.: B21D 51/26, B23K 26/08, B23K 11/06

(54) **Verfahren zur Herstellung von Dosenrümpfen aus Blech**
Process for the fabrication of can bodies of metal sheet
Procédé de fabrication de troncs de boîte en tôle

(30) Priorität: 23.01.1997 DE 19702265
(43) Veröffentlichungstag der Anmeldung: 29.07.1998
(73) Patentinhaber: Rasselstein Hoesch GmbH, 56626 Andernach (DE)
(72) Erfinder: Sauer, Reiner, Dr., 56566 Neuwied (DE)
(74) Vertreter: Rapp, Bertram, Dr.

(56) Entgegenhaltungen:
- DE-A- 4 313 871
- FR-A- 1 211 354
- US-A- 3 028 827
- US-A- 3 133 517
- US-A- 3 179 284

## Beschreibung

Die Erfindung betrifft ein Verfahren zur Herstellung von Dosenrümpfen aus Blech für die Fertigung von Dosen.

Zur Herstellung von Dosenrümpfen für die Fertigung von Dosen für den Lebensmittelbereich wird heutzutage meist Weißblech im Dickenbereich von 0,14 - 0,49 mm verwendet. Ausgehend von einem Weißblechband mit einer maximalen Breite von 1200 mm wird dieses in der Regel mit einer Innen- und Außenlackierung versehen und zu Blechtafeln geschnitten. Bei der Lackierung müssen im Bereich der späteren Schweißnähte lackfreie, streifenförmige Aussparungen vorgesehen werden, da der Lack beim Rollenwiderstandsschweißen stört. Aus den Blechtafeln werden einzelne Zargen geschnitten, die in ihrer Breite dem Dosenumfang und in ihrer Länge der Dosenhöhe entsprechen. Bereits beim Lackieren muß die Geometrie der Dosenzargen berücksichtigt werden, damit die lackfreien Aussparungen tatsächlich im Bereich der Schweißnähte zu liegen kommen. Die Zargen werden als Stapel einer Rollenwiderstandsschweißmaschine zugeführt, wo sie zunächst zum Abbau von Eigenspannungen einem Flexvorgang unterzogen und dann zu einem Zylinder gebogen werden. Der Anfang und das Ende des sich bildenden Zylinders werden mit einer Überlappungsbreite von 0,5 mm überlappt und die Überlappungsränder durch das Rollenwiderstandsschweißen miteinander verschweißt. Der so aus der flachen Zarge entstandene Zylinder bildet den Dosenrumpf. Der zunächst lackfreie Schweißbereich wird zumindest auf der Innenseite mit einer Nahtabdeckung versehen. Nach dem Schweißen wird der Dosenrumpf an seinen beiden Enden jeweils mit einem Bördel versehen, der zur späteren Verbindung mit einem Deckel und einem Boden dient. Außerdem erhält der Dosenrumpf in der Regel auch Stabilisierungssicken, um seine Außendruckstabilität für den späteren Sterilisationsvorgang der Füllgüter zu erhöhen. Bei der Dosenrumpffertigung sind für das Einstellen veränderter Dosendurchmesser und veränderter Dosenhöhen umfangreiche Umrüstungen notwendig, die verhältnismäßig große Umrüstzeiten erfordern. Hierzu müssen die Zargenmagazine, die Flexeinrichtung und der Biegeapparat neu eingestellt werden. Für andere Dosenhohen ist eine Veränderung der Vorschubeinrichtung notwendig. Eine Veränderung des Dosendurchmessers erfordert den Einbau eines passenden Schweißarms. Die großen Umrüstzeiten haben zur Folge, daß die tatsächlichen Produktionszeiten nur 50 - 70% der möglichen Nutzungszeit betragen. Hinzu kommt, daß es sich beim Schweißen des Dosenrumpfes nicht um einen kontinuierlichen Schweißvorgang handelt, sondern daß das eine Rumpfende den Startpunkt und das andere Rumpfende den Endpunkt der Schweißnaht darstellt. Beide Punkte beinhalten wegen der Diskontinuität des Schweißvorganges Fehlerquellen, so daß beim Bördeln der Dosenrümpfe hier Einrisse auftreten können.

Die US 3133 517 A beschreibt ein Verfahren zur Herstellung von Dosenrümpfen aus Blech, bei dem zunächst ein Metallblock vorbereitet wird, der in seiner Mitte mehrere neben einander liegende innere Regionen oder Kanäle aufweist, die Anti-Schweiß-Material enthalten. Der Block kann aus einem Stück gegossen sein, wobei das Anti-Schweiß-Material mit eingegossen wird. Er kann auch so gebildet sein, daß auf eine Metallplatte oder in Kanäle derselben Streifen aus Anti-Schweiß-Material plaziert werden und dann eine zweite Metallplatte darüber gelegt wird Die beiden Platten werden dann dort, wo sie nicht durch Anti-Schweiß-Material voneinander getrennt sind, miteinander verschweißt. Ein auf diese Weise gebildeter Block wird dann in Walzgerüsten zwischen mehreren Walzen solange gewalzt, bis die Gesamtdicke zwischen der oberen und unteren Oberfläche im Wesentlichen der doppelten Wanddicke der Dose entspricht. Der so gebildete Blechstreifen besteht dann aus einer oberen und unteren Metallschicht, die im Bereich des Anti-Schweiß-Materials voneinander getrennt und in den dazwischen liegenden Bereichen miteinander verbunden sind. Der Blechstreifen wird aufgewickelt und später wieder entrollt. Nach einem Lackierprozeß wird der Blechstreifen der Länge und der Breite nach in einzelne Abschnitte unterteilt. Jeder dieser Abschnitte wird mittels eines zwischen die obere und die untere Metallschicht eingeführten Dornes zu einem zylindrischen Dosenkörper aufgespreizt.

Der Erfindung liegt daher die Aufgabe zugrunde, ein Verfahren zur Herstellung von Dosenrümpfen aus Blech für die Fertigung von Dosen aufzuzeigen, welches durch kontinuierliches Schweißen die kostengünstige Herstellung von Dosenrümpfen mit großer Prozeßsicherheit ermöglicht.

Die Aufgabe wird mit dem Verfahren nach Anspruch 1 gelöst:
a) Zusammenführen und Aufeinanderlegen von zwei auf Enddicke gewalzten Blechbändern, deren Breite größer ist als ein Mehrfaches des halben Umfanges eines Dosenrumpfes,
b) Verbinden der aufeinanderliegenden Blechbänder durch mehrere kontinuierlich in Bandlängsrichtung verlaufende Verbindungsschweißnähte, deren gegenseitiger Abstand in Bandquerrichtung dem halben Dosenrumpfumfang entspricht, durch kontinuierliches Vorbeibewegen der aufeinanderliegenden Blechbänder an einer Schweißeinrichtung mit mehreren, in entsprechenden gegenseitigen Abständen angeordneten Schweißköpfen,
c) Längsschneiden der miteinander verschweißten Blechbänder längs der Mitte jeder Verbindungsschweißnaht zur Erzeugung mehrerer nebeneinander liegender Flachrohre,
d) gegebenenfalls Aufrollen der Flachrohre zur Zwischenlagerung und/oder Transport,
e) Entrollen der gegebenenfalls aufgerollten Flachrohre,
f) Querschneiden der Flachrohre in Flachrohrabschnitte, deren Länge etwa der Dosenhöhe entspricht,
g) Aufspreizen der einzelnen Flachrohrabschnitte zu einem, insbesondere zylindrischen, Dosenrumpf.

Mit Ausnahme des Verfahrensschritts b) ist das Verfahren aus der US-A-3 133 517 bekannt. Eine Dose nach Anspruch 15 wird nach diesem Verfahren hergestellt.

Die Erfindung geht also von dem Gedanken aus, aus zwei Blechbändern beliebiger Breite durch Aufeinanderlegen der Blechbänder und kontinuierliches Längsverschweißen derselben mehrere nebeneinander angeordnete und zunächst entlang der Verbindungsschweißnähte miteinander zusammenhängende Flachrohre zu bilden, die dann durch Längsschneiden der Blechbänder längs der Mitte jeder Verbindungsschweißnaht voneinander getrennt werden. Durch einfaches Verstellen des gegenseitigen Abstandes der Schweißköpfe in Bandquerrichtung läßt sich die Breite der herzustellenden Flachrohre dem jeweils gewünschten Durchmesser der später hieraus zu fertigenden Dosenrümpfe verändern. Dabei entspricht die Breite des Flachrohres, abgesehen von einer geringfügigen Zugabe für die Schweißnähte, dem halben Dosendurchmesser × π.
Die Länge der Flachrohre kann dabei der Länge der Bänder, die zwischen 1000 und 5000 m liegt, betragen. Da der Schweißvorgang kontinuierlich erfolgt, entstehen an dem Dosenrumpf keine Anfangs- und Endeffekte, die den Bördelvorgang negativ beeinträchtigen könnten. Hierdurch ist eine hohe Prozeßsicherheit gewährleistet. Auch auf das Einrunden und Überlappen einer Schweißnaht, wie sie bisher beim Rollenwiderstandsschweißen einzelner Dosenrümpfe erforderlich waren, und welche in ihrer Wirkung empfindlich auf Veränderungen in der Werkstoffestigkeit reagieren, wird bei dem neuen Verfahren verzichtet, was ebenfalls die Prozeßsicherheit erhöht. Die Flachrohre können aufgewickelt und zu einem Abfüller geliefert werden, wo sie mit relativ einfachen Maschinen quer geschnitten und zu Dosenrümpfen aufgespreizt werden. Das Flachrohr nimmt beim Transport wesentlich weniger Volumen ein als eine leere Dose, was sich ebenfalls kostengünstig auswirkt. Aus einem Flachrohr können in einfacher Weise Dosen unterschiedlicher Höhe gefertigt werden, indem man einfach von dem Flachrohr durch Querschneiden Flachrohrabschnitte abtrennt, deren Länge etwa der Dosenhöhe entspricht. Hierbei muß die Länge der Flachrohrabschnitte um einen kleinen Betrag größer sein als die gewünschte Dosenhöhe, da nach dem Aufspreizen des Flachrohrabschnittes ein kleiner Teil von dessen Länge für die beiden Bördel an den beiden Enden des Dosenrumpfes benötigt wird.

Zweckmäßig werden die Verbindungsschweißnähte durch Laserschweißen erzeugt. Das Verbinden der beiden Blechbänder mittels Laser läßt nämlich auch das Vorhandensein von organischen Beschichtungen im Bereich der Schweißnähte zu, so daß auf beschichtungsfreie Aussparungen, wie sie beim Rollenwiderstandsschweißen erforderlich sind, verzichtet werden kann. Eine optimale Auslegung des Laserstrahlganges beim Schweißen bietet die Möglichkeit, daß auf der Innenseite des Flachrohres keine Beschädigung der organischen Beschichtung entsteht, so daß später am Dosenrumpf auf eine Reparaturbeschichtung im Bereich der Schweißnaht verzichtet werden kann.

Weiterhin erfolgt das Längsschneiden zweckmäßig durch Laserschneiden. Dies ermöglicht einerseits ein sehr genaues Schneiden und andererseits ergibt sich durch die beim Laserschneiden entstehende Erhitzung ein Glühvorgang in den benachbarten Schweißnähten, der zu einer guten Umformfähigkeit derselben führt.

Der Focusdurchmesser des Schweißlasers sollte so gewählt werden, daß die Schweißnahtbreite der Summe der doppelten Blechdicke plus dem Focusdurchmesser des anschließenden Schneidlasers entspricht. Wird nämlich beim Schneidvorgang das Schneiden in der Mitte der Schweißnaht durchgeführt, dann verbleibt an den entstehenden Flachrohren jeweils ein Teil der Schweißnaht, dessen Breite in etwa der Blechdicke entspricht.

Zum Laserschneiden sollte ein Laser mit einem inneren Stahlengang hoher Energiedichte, zur Erzeugung des Schnittes, und mit einem äußeren Stahlengang niedriger Energiedichte,zum Glühen der beidseitig des Schnittes verbleibenden Schweißnahtteile der angrenzenden Flachrohre, verwendet werden.

Das erfindungsgemäße Verfahren und weitere Einzelheiten bei der Durchführung dieses Verfahrens werden nachstehend anhand der beiliegenden Zeichnungen näher erläutert.
Es zeigen:
- Figur 1: die schematische Darstellung der ersten Verfahrensschritte des erfindungsgemäßen Verfahrens,
- Figur 2: die schematische Darstellung der Schweißeinrichtung im Querschnitt nach der Linie II-II der Figur 1,
- Figur 3: einen Querschnitt der Blechbänder im Bereich der Schweißnaht in stark vergrößertem Maßstab,
- Figur 4: einen Querschnitt der Blechbänder im Bereich des Schneidlasers,
- Figur 5: die schematische Darstellung weiterer Verfahrensschritte,
- Figur 6: das Spreizen des Flachrohrabschnittes,
- Figur 7: das Flachwalzen der Schweißnähte,
- Figur 8: einen Querschnitt der Blechbänder im Bereich von Druckrollen

Zur Durchführung des Verfahrens kann Ueißblech (verzinntes Feinstblech), verchromtes Feinstblech oder auch blankes Blech aus Stahl im Dickenbereich von 0,05 - 0,49 mm eingesetzt werden. Die Festigkeit des Stahlbleches kann im Bereich zwischen 200 und mehr als 1000 N/mm² liegen. Das Stahlblech kann einseitig oder beidseitig eine organische Beschichtung aufweisen, die in bekannter Weise als Lackierung oder als Kunststoffolie aufgebracht ist. Falls erforderlich, kann die Beschichtung auch im Bereich der späteren Schweißnähte Aussparungen aufweisen. Es können auch Blechbänder aus anderen Metallen als Stahl, z.B. aus Aluminium, verwendet werden.

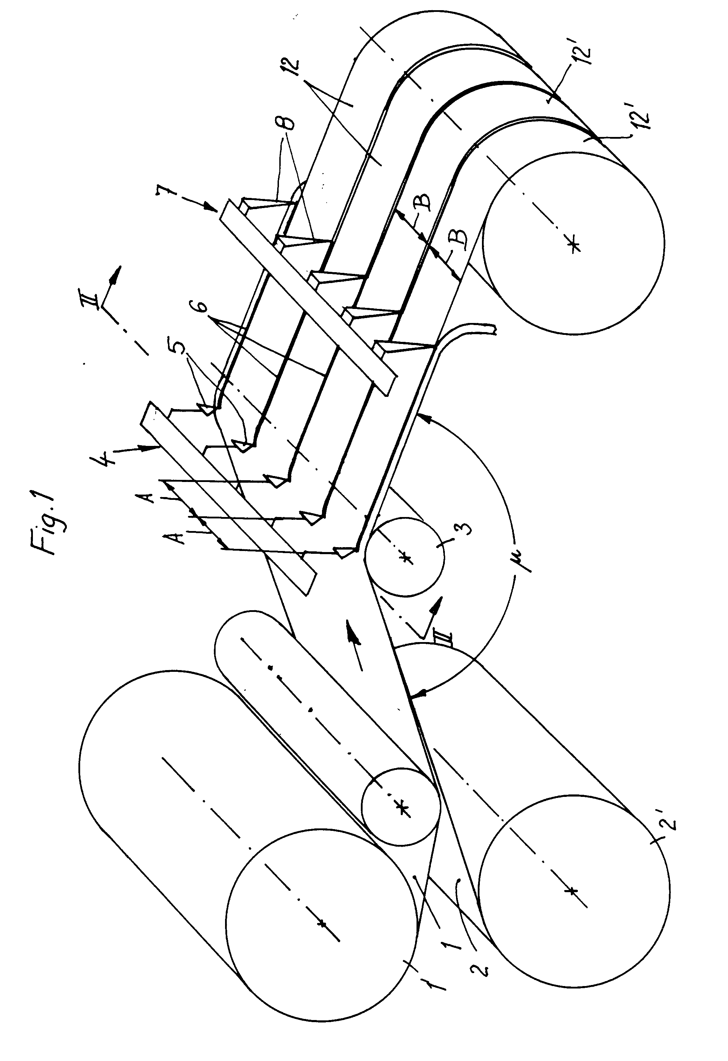

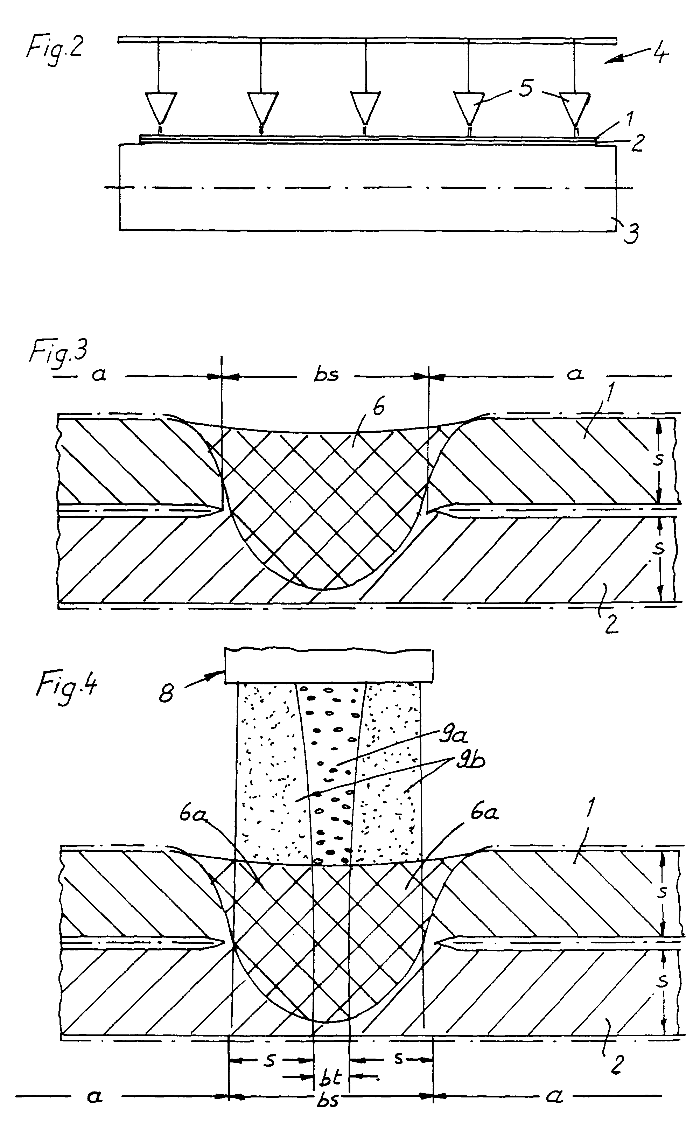

Wie aus Figur 1 ersichtlich ist, werden zwei Bänder 1, 2 von zwei Rollen 1', 2' kommend zusammengeführt und dabei aufeinandergelegt. Die Bänder 1, 2 können dabei eine Breite von beispielsweise 1200 mm haben. Die aufeinandergelegten Blechbänder 1, 2 werden unter Spannung gemeinsam so über eine Umlenkwalze 3 geführt, daß die vor und hinter der Umlenkwalze 3 verlaufenden Bandabschnitte miteinander einen stumpfen Umlenkwinkel µ bilden. Die Spannung in den beiden Bändern 1, 2 wird dadurch erzeugt, daß die Rollen 1', 2' beim Abwickeln der Blechbänder 1, 2 gebremst werden, wodurch ein sogenannter Rückzug entsteht und andererseits die aus den Blechbändern 1, 2 gebildeten Flachrohre 12 unter Spannung aufgewickelt werden, wodurch ein sogenannter Vorzug entsteht. Durch das Gegeneinanderwirken von Rückzug und Vorzug entsteht in den aufeinanderliegenden Blechbändern eine Spannung und durch die gleichzeitige Umlenkung der Blechbänder 1, 2 mittels der Umlenkwalze 3 werden die Blechbänder im Bereich der Umlenkwalze 3 fest aufeinandergedrückt. Gegebenenfalls können von oben auch noch nicht dargestellte Druckrollen wirken.

Im Bereich der Umlenkwalze 3 ist eine Schweißeinrichtung 4 angeordnet, die mehrere Schweißköpfe 5 aufweist. Der gegenseitige Abstand A der Schweißköpfe ist einstellbar. Die Schweißköpfe 5 sind zweckmäßig als Laserschweißköpfe ausgebildet. Die aufeinandergelegten und aufeinandergedrückten Blechbänder 1, 2 werden mit einer Geschwindigkeit von etwa 20 - 100 m/min unter den Laserschweißköpfen 5 vorbeigeführt, wobei jeder Laserschweißkopf 5 eine die beiden Blechbänder 1, 2 miteinander verbindende Verbindungsschweißnaht 6 erzeugt, die in Bandlängsrichtung verläuft. Das Laserschweißen findet vom Bandanfang bis zum Bandenede kontinuierlich statt. Der durch den Abstand A der Laserschweißköpfe 5 bestimmte Abstand a der Verbindungsschweißnähte 6 entspricht im wesentlichen dem halben Umfang des herzustellenden Dosenrumpfes nach der Formel a = 0,5 × D × π, wobei D der Nenndurchmesser des Dosenrumpfes ist. Der Mittenabstand A der Schmeißköpfe 5 ist um die Gesamtbreite bs der Schweißnähte 6 breiter als der Abstand a, wie nachstehend noch anhand der Figuren 3 und 4 erläutert werden wird. Die äußeren Verbindungsschweißnähte haben von den Bandkanten einen Abstand von mindestens 2 mm, damit eine Kantenbesäumung möglich wird.

Nachdem die beiden Blechbänder 1, 2 entlang der Verbindungsschweißnähte 6 miteinander verschweißt wurden, erfolgt an der Schneidstation 7 das Längsschneiden der miteinander verschweißten Blechbänder längs der Mitte jeder Verbindungsschweißnaht 6 zweckmäßig mittels mehreren Schneidlasern 8. Jeder Schneidlaser 8 ist dabei so eingestellt, daß der Schneidvorgang mitten durch die jeweilige Verbindungsschweißnaht 6 erfolgt, was in Figur 4 näher dargestellt ist.

Als Schneidlaser 8 wird zweckmäßig ein Laser mit einem inneren Strahlengang 9a mit hoher Energiedichte und einem äußeren Strahlengang 9b mit geringerer Energiedichte verwendet. Die Verbindungsschweißnaht 6, die eine Breite bs aufweist, wird in ihrer Längsmitte durch den inneren Strahlengang 9a auf einer Breite bt auseinandergetrennt. Zu beiden Seiten der durch den inneren Strahlengang 9a erzeugten Trennfuge verbleiben Schweißnahtteile 6a, durch welche die beiden übereinanderliegenden Blechbänder 1, 2 weiterhin miteinander verschweißt bleiben. Die Breite jedes Schweißnahtteiles 6a sollte dabei mindestens der Blechdicke s entsprechen. Der äußere Strahlengang 9b sorgt mit seiner geringeren Energiedichte für das Glühen der beiden verbleibenden Schweißnahtteile 6a. Dieses Glühen ist für die weitere Verarbeitung von Bedeutung. Aus Figur 4 ergibt sich, daß die Breite bs der Schweißnaht 6 vor dem Zerschneiden ungefähr gleich der Summe der Schnittspaltbreite bt + 2 × s sein sollte. Demzufolge sollte der Focusdurchmesser jedes Schweißlasers 5 so gewählt werden, daß die Schweißnahtbreite bs der Summe aus der doppelten Blechdicke s plus dem Focusdurchmesser des Schneidlasers 8 entspricht.

Durch das Laserschneiden entstehen mehrere voneinander getrennte Flachrohre 12, an deren Längsränder das obere Blechbandteil 1 mit dem unteren Blechbandteil 2 über die verbliebenen Schweißnahtteile 6a miteinander verbunden sind. Die Flachrohre 12, deren Länge der Bandlänge entspricht, die zwischen 1000 und 5000m betragen kann, werden auf Haspeln 12' aufgewickelt. Die Haspeln 12' können dann zwischengelagert und zu einem Abfüller oder auch einem Dosenmacher geliefert werden. Durch einfaches Verschieben der Schweißlaser 5 und der Schneidlaser 8 in Bandquerrichtung läßt sich die Breite B der entstehenden Flachrohre 12 entsprechend dem gewünschten Dosendurchmesser einstellen. Die Breite B entspricht dabei 0,5 ×D× π + 2 ×s.

Das Verbinden der beiden Blechbänder 1, 2 durch Laserschweißen läßt dabei auch das Vorhandensein von organischen Beschichtungen in der Schweißfuge zu, so daß die organische Beschichtung auf den Blechbändern 1, 2 durchgehend sein kann und auf Aussparungen, wie sie beim herkömmlichen Dosenschweißen mit Rollenwiderstandsschweißen erforderlich sind, verzichtet werden kann. Eine optimale Auslegung des Laserstrahlganges beim Laserschweißen bietet zudem die Möglichkeit, daß auf der Innenseite der Flachrohre 12 keine Beschädigung der organischen Beschichtung entsteht, so daß an dem späteren Dosenrumpf auf eine Reparaturbeschichtung verzichtet werden kann. Die Zeitnutzungsphasen der Schweißvorrichtung 5 werden durch den kontinuierlichen Schweißvorgang erheblich gesteigert, wodurch sich die Fertigungskosten des Dosenrumpfes deutlich reduzieren. Durch den Glühvorgang beim Laserschneiden entstehen weiche Schweißnähte mit guter Umformfähigkeit.

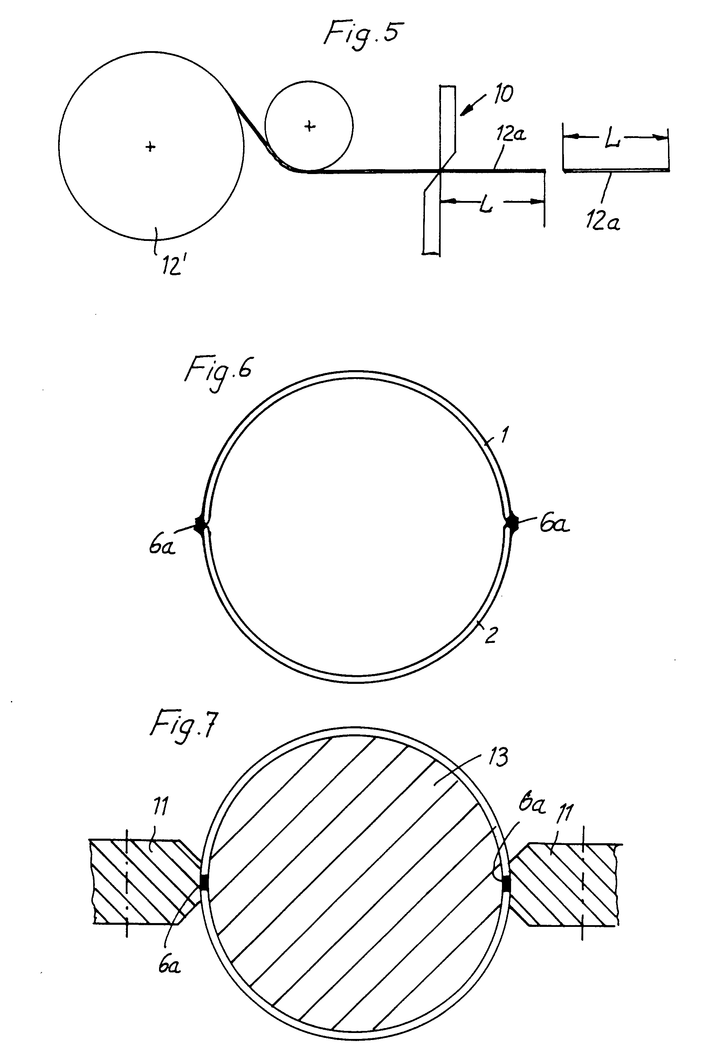

Die Fertigung von Dosenrümpfen aus den sehr langen Flachrohren 12 wird gemäß Figur 5 - 7 wie folgt durchgeführt:

Das auf der Haspel 12' aufgerollte Flachrohr wird abgerollt und durch Querschneiden an der Querschneidvorrichtung 10 in einzelne Flachrohrabschnitte 12a geschnitten. Die Länge L eines Flachrohrabschnittes 12a entspricht dabei der gewünschten Dosenhöhe zuzüglich einer kleinen Materiallänge, die zur Herstellung der beiden Bördel an den Enden des Dosenrumpfes benötigt wird. Nach dem Querschneiden werden die Flachrohrabschnitte 12 zu einem vorzugsweise zylindrischen Dosenrumpf gespreizt, wie es in Figur 6 dargestellt ist. Es sind auch eckige und profilierte Dosenrumpfformen möglich. Beim Spreizen kann der Dosenrumpf auch mit Stabilisierungssicken versehen werden. Die Flachrohrabschnitte können nicht nur für Dosenrümpfe verwendet werden; es sind auch andere Verwendungszwecke möglich, wie z.B. Automobilteile usw..

Gegenüber herkömmlichen Dosenrümpfen, die jeweils nur eine Schweißnaht besitzen, haben die neuen Dosenrümpfe, wie aus Figur 6 und 7 ersichtlich ist, zwei diametral gegenüberliegende Schweißnähte. Falls diese Schweißnähte sich wegen ihrer Dicke störend auf die Weiterverarbeitung auswirken sollten, können die Schweißnähte 6a, wie es in Figur 7 dargestellt ist, durch Rollen 11 flachgewalzt werden. Hierzu wird der Dosenrumpf auf einen Dorn 13 aufgenommen. Abgeflachte Schweißnähte haben den Vorteil, daß beim Einziehen der Dosen am oberen bzw. unteren Ende des Dosenrumpfes Durchmesserreduktionen durch Stauchringe herbeigeführt werden können und dabei keine Falten entstehen. Bei diesem Stauchen gibt es einen äußeren Ring und einen Dorn, die um so höhere Durchmesserreduktionen erlauben, je kleiner der Umformspalt zwischen beiden Teilen ist. Dieser Spalt kann um so kleiner eingestellt werden, je flacher die Schweißnähte 6a sind. Durch das Glühen beim Laserschneiden lassen sich die weichen Schweißnähte 6a durch die Rollen 11 leicht flachdrücken.

Gegebenenfalls kann man die Verbindungsschweißnähte 6 auch durch Rollenwiderstandsschweißen erzeugen. Wenn hierbei die Blechbänder verwendet werden, die ein- oder beidseitig mit einer organischen Beschichtung versehen sind, dann müssen die Blechbänder im Bereich der Verbindungsschweißnähte in Bandlängsrichtung verlaufende, beschichtungsfreie Streifen, auch Aussparungen genannt, aufweisen, da beim Rollenwiderstandsschweißen in der Schweißnaht keine organischen Bestandteile auftreten dürfen.

Da sich das erfindungsgemäße Verfahren sowohl für Bleche eignet, die ein- oder beidseitig mit einer organischen Beschichtung versehen sind, als auch für Bleche ohne eine derartige Beschichtung, ist eine solche Beschichtung nur in den Figuren 3 und mit jeweils strichpunktierten Linien angedeutet.

Wenn die beiden aufeinandergelegten Blechbänder an ihren einander zugekehrten Innenseiten eine thermoplastische Kunststoffbeschichtung aufweisen, sollte beim Laserschweißen oder Laserschneiden die Wärme in die Randbereiche der Schweißnaht so gezielt eingeleitet werden, daß eine Versiegelung der beiden Kunststoffschichten in dem unmittelbar an die Schweißnaht angrenzenden Bereich herbeigeführt wird. Diese Versiegelung sollte über die gesamte Schweißnahtlänge mit einer Breite von 0,1 bis 0,3 mm erfolgen. Die Siegelnähte sorgen beim Aufweiten der Flachrohre zu einer Dose an der Doseninnenseite für die Abdeckung der Dosenschweißnähte. Ein zusätzlicher Korrosionsschutz ist dann nicht erforderlich.

Laserschweißversuche haben gezeigt, daß der an den einanderzugekehrten Innenseiten der Blechbänder im Bereich der späteren Schweißnähte vorhandene Kunstoff zweckmäßigerweise vor dem Schweißen entfernt werden sollte. Die Verbrennungsprodukte des Kunststoffes, die beim Schweißen entstehen, können nämlich zum Teil als Gase durch die Schweißnaht treten und führen dann zu Löchern. Dementsprechend wäre die Schweißnaht und damit die Dose undicht.

Deshalb ist es zweckmäßig, den Kunststoff vor dem Schweißen im Bereich der späteren Schweißnähte zu entfernen. Bei einer Schweißnahtbreite von zum Beispiel 0,4 mm sollte der Kunststoff über eine Breite von 0,4 bis 1,0 mm, vorzugsweise 0,5 mm entfernt werden.

Dies erfolgt zweckmäßig dadurch, daß vor dem Schweißen im Bereich der späteren Schweißnaht auf die einander abgekehrten Außenseiten der aufeinanderliegenden Blechbänder Druck unter gleichzeitiger Anwendung von Wärme ausgeübt wird, um den thermoplastischen Kunststoff vom Nahtbereich weg zur Seite zu drücken.

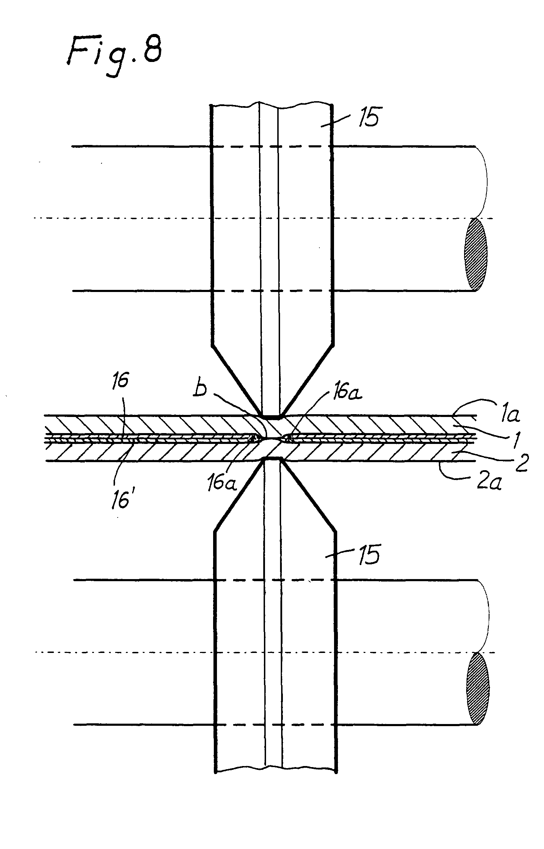

Wie man aus Figur 8 entnehmen kann, wird die Druckund Wärmeeinwirkung zweckmäßig mittels beheizter Druckrollen 15 durchgeführt, die einander gegenüberliegend angeordnet sind und an die Außenseiten 1a, 2a der übereinanderliegenden, weiterbewegten Blechbänder 1, 2 angedrückt werden. Die Druckrollen 15 befinden sich dabei vor den in Figur 1 und 2 dargestellten Laserschweißköpfen 5. Durch die Wärme und den Druck der Druckrollen 15 werden die beiden Kunststoffschichten in einem streifenförmigen Bereich b der späteren Schweißnaht erweicht und zur Seite gedrückt. In dem streifenförmigen Bereich b wird hierdurch die Dicke der Kunststoffschichten außerordentlich dünn und geht praktisch gegen Null. Infolgedessen ist im Bereich b der späteren Schweißnaht praktisch kein Kunststoff mehr vorhanden, so daß auch keine störenden Einflüsse beim Schweißen entstehen. Gleichzeitig wird durch den Druck und die Wärme der Druckrollen 15 aber auch erreicht, daß der Kunststoff in dem Bereich b zum Schmelzen gebracht wird und der geschmolzene Kunststoff aus dem Bereich b seitlich nach links und nach rechts gedrückt wird. Durch den in den Bereichen 16a und 16b geschmolzenen Kunststoff werden die beiden Kunststoffschichten 16, 16' miteinander versiegelt (verschweißt), so daß beim Aufweiten der Flachrohre zu einer Dose an deren Innenseite eine zusammenhängende Kunststoffschicht vorhanden ist.

## Patentansprüche

1. Verfahren zur Herstellung von Dosenrümpfen aus Blech für die Fertigung von Dosen mit folgenden Verfahrensschritten:
a) Zusammenführen und Aufeinanderlegen von zwei auf Enddicke gewalzten Blechbändern (1, 2), deren Breite größer ist als ein Mehrfaches des halben Umfanges eines Dosenrumpfes,
b) Verbinden der aufeinanderliegenden Blechbänder (1, 2) durch mehrere kontinuierlich in Bandlängsrichtung verlaufende Verbindungsschweißnähte (6), deren gegenseitiger Abstand (a) in Bandquerrichtung dem halben Dosenrumpfumfang entspricht, durch kontinuierliches Vorbeibewegen der aufeinanderliegenden Blechbänder (1, 2) an einer Schweißeinrichtung (4) mit mehreren, in entsprechenden gegenseitigen Abständen (A) angeordneten Schweißköpfen (5),
c) Längsschneiden der miteinander verschweißten Blechbänder längs der Mitte jeder Verbindungsschweißnaht (6) zur Erzeugung mehrerer nebeneinander liegender Flachrohre (12'),
d) gegebenenfalls Aufrollen der Flachrohre zur Zwischenlagerung und/oder Transport,
e) Entrollen der gegebenenfalls aufgerollten Flachrohre,
f) Querschneiden der Flachrohre (12') in Flachrohrabschnitte (12a), deren Länge (L) etwa der Dosenhöhe entspricht,
g) Aufspreizen der einzelnen Flachrohrabschnitte (12a) zu jeweils einem, insbesondere zylindrischen, Dosenrumpf.

2. Verfahren nach Anspruch 1, **dadurch gekennzeichnet,** daß die Verbindungsschweißnähte (6) durch Laserschweißen erzeugt werden.

3. Verfahren nach Anspruch 1 oder 2, **dadurch gekennzeichnet,** daß das Längsschneiden durch Laserschneiden (8) erfolgt.

4. Verfahren nach Anspruch 2 und 3, **dadurch gekennzeichnet,** daß der Focusdurchmesser des Schweißlasers (8) so gewählt wird, daß die Schweißnahtbreite (bs) der Summe aus der doppelten Blechdicke (s) plus dem Focusdurchmesser des Schneidlasers entspricht.

5. Verfahren nach einem der Ansprüche 1 bis 4, **dadurch gekennzeichnet,** daß zum Laserschneiden ein Laser (8) mit einem inneren Strahlengang (9a) hoher Energiedichte, zur Erzeugung des Schnittes, und mit einem äußeren Stahlengang (9b) niedrigerer Energiedichte, zum Glühen der beidseitig des Schnittes verbleibenden Schweißnahtteile (6a) der angrenzenden Flachrohre (12'), verwendet wird.

6. Verfahren nach einem der Ansprüche 1 bis 5, **dadurch gekennzeichnet,** daß die aufeinandergelegten Blechbänder (1, 2) im Bereich der Schweißköpfe (5) unter Spannung gemeinsam so über eine Umlenkwalze (3) geführt werden, daß die vor und hinter der Umlenkwalze verlaufenden Bandabschnitte miteinander einen stumpfen Umlenkwinkel (µ) bilden.

7. Verfahren nach einem der. Ansprüche 1 bis 6, **dadurch gekennzeichnet,** daß die verbleibenden Schweißnahtteile (6a) der Verbindungsschweißnähte (6) nach dem Aufspreizen flachgewalzt werden.

8. Verfahren nach einem der Ansprüche 1 bis 7, **dadurch gekennzeichnet,** daß der Dosenrumpf beim Aufspreizen mit Stabilisierungssicken versehen wird.

9. Verfahren nach einem der Ansprüche 1 bis 8, **dadurch gekennzeichnet,** daß Blechbänder (1, 2) verwendet werden, die ein- oder beidseitig mit einer organischen Beschichtung versehen sind.

10. Verfahren nach einem der Ansprüche 1, 3 und 5 bis 9, **dadurch gekennzeichnet,** daß die Verbindungsschweißnähte (6) durch Rollenwiderstandsschweißen erzeugt werden.

11. Verfahren nach Anspruch 10, **dadurch gekennzeichnet,** daß Blechbänder (1, 2) verwendet werden, die ein- oder beidseitig mit einer organischen Beschichtung versehen sind, wobei die Blechbänder im Bereich der Verbindungsschweißnähte (6) in Bandlängsrichtung verlaufende, beschichtungsfreie Streifen aufweisen.

12. Verfahren nach Anspruch 9, **dadurch gekennzeichnet,** daß bei Blechbändern (1, 2), die an ihren einander zugekehrten Innenseiten mit einer Beschichtung aus thermoplastischem Kunststoff versehen sind, der Kunststoff vor dem Schweißen im Bereich der späteren Schweißnaht entfernt wird.

13. Verfahren nach Anspruch 12, **dadurch gekennzeichnet,** daß vor dem Schweißen im Bereich der späteren Schweißnaht auf die einander abgekehrten Außenseiten der aufeinanderliegenden Blechbänder Druck unter gleichzeitiger Anwendung von Wärme ausgeübt wird, um den thermoplastischen Kunststoff vom Nahtbereich weg zur Seite zu drücken.

14. Verfahren nach Anspruch 13, **dadurch gekennzeichnet,** daß die Druck- und Wärmeeinwirkung mittels beheizter Druckrollen durchgeführt wird, die einander gegenüberliegend an die Außenseiten der Blechbänder angedrückt werden.

15. Dose mit einem Dosenrumpf hergestellt nach einem der Ansprüche 1 - 14, **dadurch gekennzeichnet**, daß der Dosenrumpf aus zwei auf Enddicke gewalzten Blechen (1,2) besteht, die flach aufeinanderliegend durch zwei in gegenseitigem Abstand a = 0,5 x D x π angeordnete Laserschweißnähte (6a) miteinander verbunden und so aufgespreizt sind, daß sich die Laserschweißnähte an zwei diametral gegenüberliegenden Stellen des Dosenrumpfes befinden, wobei D der Nenndurchmesser des Dosenrumpfes ist.

16. Dose nach Anspruch 15, **dadurch gekennzeichnet**, daß die Laserschweißnähte (6a) flachgewalzt sind.

17. Dose nach Anspruch 15 oder 16, **dadurch gekennzeichnet**, daß die Bleche (1, 2) zumindest an ihren einander zugekehrten Seiten mit einer organischen Beschichtung versehen sind, die vor dem Laserschweißen auf die Bleche aufgebracht wurde.

## Claims

1. Process for the fabrication of can bodies from sheet metal for the manufacture of cans with the following process steps:
a) running together and superposing two sheet metal strips (1, 2) which have been rolled to final thickness and the breadth of which is greater than a multiple of half the circumference of a can body;
b) joining the superposed sheet metal strips (1, 2) by a plurality of joining weld seams (6) which run continuously in the longitudinal direction of the strips and the mutual spacing (a) of which in the transverse direction of the strips corresponds to half the circumference of the can body, by continuously moving the superposed sheet metal strips (1, 2) past a welding device (4) with a plurality of welding heads (5) disposed with corresponding mutual spacing (A);
c) cutting the welded sheet metal strips longitudinally along the middle of each joining weld seam (6) to produce a plurality of adjacent flat tubes (12');
d) possibly rolling up the flat tubes for interim storage and/or transport;
e) unrolling the possibly rolled up flat tubes;
f) cutting the flat tubes (12') transversely into flat tube sections (12a) the length (L) of which roughly corresponds to the height of the can;
g) spreading the individual flat tube sections (12a) so as to form in each case a, particularly cylindrical, can body.

2. Process according to claim 1, characterised in that the joining weld seams (6) are produced by laser welding.

3. Process according to claim 1 or 2, characterised in that the longitudinal cutting is carried out by laser cutting (8).

4. Process according to claim 2 and 3, characterised in that the focus diameter of the welding laser (8) is selected so that the weld seam breadth (bs) corresponds to the sum of double the sheet metal thickness (s) plus the focus diameter of the cutting laser.

5. Process according to one of claims 1 to 4, characterised in that the laser cutting is carried out using a laser (8) with an inner beam path (9a) of high energy density to produce the cut, and with an outer beam path (9b) of lower energy density to anneal the weld seam parts (6a) of the adjacent flat tubes (12') left on both sides of the cut.

6. Process according to one of claims 1 to 5, characterised in that in the area of the welding heads. (5) the superposed sheet metal strips (1, 2) are guided together under tension over a deflecting roller (3) so that the strip sections running before and after the deflecting roller together form an obtuse deflection angle (µ).

7. Process according to one of claims 1 to 6, characterised in that the remaining weld seam parts (6a) of the joining weld seams (6) are rolled flat after the spreading.

8. Process according to one of claims 1 to 7, characterised in that the can body is provided with stabilising corrugations during the spreading.

9. Process according to one of claims 1 to 8, characterised in that sheet metal strips (1, 2) are used which are provided with an organic coating on one or both sides.

10. Process according to one of claims 1, 3 and 5 to 9, characterised in that the joining weld seams (6) are produced by roller resistance welding.

11. Process according to claim 10, characterised in that sheet metal strips (1, 2) are used which are provided with an organic coating on one or both sides, whereby the sheet metal strips exhibit coating-free stripes running in the longitudinal direction of the strips in the area of the joining weld seams (6).

12. Process according to claim 9, characterised in that in the case of sheet metal strips (1, 2) which are provided with a coating of thermoplastic plastic on their facing insides, the plastic is removed before the welding in the area of the later weld seam.

13. Process according to claim 12, characterised in that before the welding, pressure and heat are simultaneously applied to the outsides of the superposed sheet metal strips facing away from one another in the area of the later weld seam in order to press the thermoplastic plastic to the side away from the seam area.

14. Process according to claim 13, characterised in that the application of pressure and heat is carried out by means of heated pressure rollers which are pressed against the outsides of the sheet metal strips lying on opposite sides to one another.

15. Can with a can body fabricated according to one of claims 1 to 14, characterised in that the can body consists of two metal sheets (1, 2) which have been rolled to final thickness and lying flat on one another are joined to one another by two laser weld seams (6a) arranged with a mutual spacing a = 0.5 x D x π and are spread so that the laser weld seams are located at two diametrically opposing positions on the can body, D being the nominal diameter of the can body.

16. Can according to claim 15, characterised in that the laser weld seams (6a) are rolled flat.

17. Can according to claim 15 or 16, characterised in that the metal sheets (1, 2) are provided with an organic coating which is applied to the metal sheets before the laser welding, at least on their facing sides.

## Revendications

1. Procédé de fabrication de corps de boîte de conserve en tôle pour la production de boîtes de conserve, comportant les opérations de procédé suivantes consistant à :
a) réunir et superposer deux bandes de tôle (1, 2), laminées à une épaisseur finale, dont la largeur est supérieure à un multiple de la demi-circonférence d'un corps de boîte,
b) rendre solidaires les bandes de tôle (1, 2), superposées, au moyen de plusieurs cordons de soudure de solidarisation (6), s'étendant d'une manière continue suivant la direction longitudinale des bandes, donc l'espacement mutuel (a) suivant la direction transversale des bandes correspond à la demi-circonférence des corps de boîte, en faisant passer les bandes de tôle (1, 2), superposées, d'une manière continue devant un dispositif de soudure (4) comportant plusieurs têtes de soudure (5) disposées suivant des espacements mutuels (a) appropriés,
c) découper dans la longueur les bandes de tôle, soudées entre elles, le long du milieu de chaque cordon de soudure de solidarisation (6) de façon à produire plusieurs tubes à plat (12') disposés côte à côte,
d) éventuellement enrouler les tubes à plat en vue du stockage intermédiaire et/ou du transport,
e)- dérouler les tubes à plat éventuellement enroulés,
f) découper transversalement les tubes à plat (12') en tronçons de tube à plat (12a) dont la longueur (L) correspond approximativement à la hauteur des boîtes de conserves,
g) ouvrir, par écartement, les tronçons de tube à plat (12a) élémentaires de façon à donner, pour chacun, un corps de boîte de conserves, notamment cylindrique, respectif.

2. Procédé suivant la revendication 1, caractérisé en ce que les cordons de soudure de solidarisation (6) sont produits par soudage laser.

3. Procédé suivant la revendication 1 ou 2, caractérisé en ce que le découpage longitudinal a lieu à l'aide de moyens de découpage laser (8).

4. Procédé suivant la revendication 2 et la revendication 3, caractérisé en ce que le diamètre focal du laser de soudage (8) est choisi d'une manière telle que la largeur de cordon de soudure (bs) correspond à la somme de deux fois l'épaisseur de tôle (s) plus le diamètre focal du laser de découpage.

5. Procédé suivant l'une des revendications 1 à 4, caractérisé en ce que, pour le découpage laser, on utilise un laser (8) comportant un faisceau intérieur (9) à haute densité d'énergie, servant à produire le découpage, et un faisceau extérieur (9b) à densité d'énergie plus faible, servant à soumettre à un recuit les deux parties de cordon de soudure (6a), des tubes à plat (12') adjacents, qui subsistent des deux côtés de la coupe.

6. Procédé suivant l'une des revendications 1 à 5, caractérisé en ce que les bandes de tôle (1, 2) superposées sont guidées ensemble sous tension, dans la zone des têtes de soudage (5), par-dessus un cylindre de changement de direction (3), d'une manière telle que les sections de bandes s'étendant en amont et en aval du cylindre de changement de direction font entre elles un angle de déviation (µ) obtus.

7. Procédé suivant l'une des revendications 1 à 6, caractérisé en ce que les parties de cordon de soudure (6a) des cordons de soudure de solidarisation (6) qui subsistent sont aplaties au galet après l'ouverture par écartement.

8. Procédé suivant l'une des revendications 1 à 17, caractérisé en ce que le corps de boîte de conserves est pourvu, lors de l'ouverture par écartement, de nervures de stabilisation.

9. Procédé suivant l'une des revendications 1 à 8, caractérisé en ce qu'on utilise des bandes de tôle (1, 2) qui sont pourvus, sur une face ou sur les deux, d'un revêtement organique.

10. Procédé suivant l'une des revendications 1, 3 et 5 à 9, caractérisé en ce que les cordons de soudure de solidarisation (6) sont produits par soudage par résistance à molette.

11. Procédé suivant la revendication 10, caractérisé en ce qu'on utilise des bandes de tôle (1, 2) qui sont pourvues, sur une face ou sur les deux, d'un revêtement organique, les tôles comportant, dans la zone des cordons de soudure de solidarisation (6), des parties en forme de ruban, dépourvues de revêtement, qui s'étendent suivant la direction longitudinale des bandes.

12. Procédé suivant la revendication 9, caractérisé en ce que, dans le cas de bandes de tôle (1, 2) qui sont pourvues, sur leurs faces intérieures tournées l'une vers l'autre, d'un revêtement en matière thermoplastique, la matière plastique est, avant le soudage, retirée dans la zone du futur cordon de soudure.

13. Procédé suivant la revendication 12, caractérisé en ce qu'avant le soudage, une pression est exercée, avec application simultanée de chaleur, dans la zone du futur cordon de soudure sur les faces extérieures, situées à l'opposé l'une de l'autre, des bandes de tôle superposées, afin d'écarter la matière thermoplastique de la zone du cordon, vers le côté et sous pression.

14. Procédé suivant la revendication 13, caractérisé en ce que l'application de pression et de chaleur est effectuée au moyen de galets de pression chauffés qui sont appliqués sous pression, en se faisant face l'un l'autre, sur les faces extérieures des bandes de tôle.

15. Boite de conserves comportant un corps de boîte fabriqué suivant l'une des revendications 1 - 14, caractérisé en ce que le corps de boîte de conserves est constitué de deux tôles (1, 2), laminées à une épaisseur finale, qui sont rendues solidaires l'une de l'autre, en étant supergosées à plat, au moyen de deux cordons de soudure laser (6a) disposés à un espacement mutuel a = 0,5 x D x π et qui sont ouvertes par écartement d'une manière telle que les cordons de soudure laser sont situés en deux emplacements diamétralement opposés du corps de boîte, D étant le diamètre nominal du corps de boîte.

16. Boîte de conserves suivant la revendication 15, caractérisé en ce que les cordons de soudure laser (6a) sont aplatis par galet.

17. Boîte de conserves suivant la revendication 15 ou 16, caractérisé en ce que les tôles (1, 2) sont pourvues, au moins sur leurs faces tournées l'une vers l'autre, d'un revêtement organique qui est déposé sur les tôles avant le soudage laser.
